# FASCICULE DE BREVET EUROPEEN

(11) **EP 3 079 247 B1**
(45) Date de publication et mention de la délivrance du brevet: **13.05.2020**
(21) Numéro de dépôt: 15193593.9
(22) Date de dépôt: 09.11.2015
(51) Int. Cl.: H02M 1/36, H02M 7/162, H02M 1/08

(54) **CIRCUIT DE COMMANDE D'UN PONT REDRESSEUR**
STEUERSCHALTKREIS EINER GLEICHRICHTERBRÜCKE
CIRCUIT FOR CONTROLLING A RECTIFIER BRIDGE

(30) Priorité: 07.04.2015 FR 1552983
(43) Date de publication de la demande: 12.10.2016
(73) Titulaire: STMicroelectronics (Tours) SAS, 37100 Tours (FR); STMicroelectronics S.r.l., 20041 Agrate Brianza (MI) (IT)
(72) Inventeur: GONTHIER, Laurent, 37000 TOURS (FR); LAROSA, Roberto, 95029 CATANIA (IT); ZOPPI, Giulio, 90121 PALERMO (IT)
(74) Mandataire: Cabinet Beaumont

(56) Documents cités:
- CN-A- 101 982 934
- FR-A1- 2 742 013
- FR-A5- 2 038 643
- US-A- 4 658 199
- US-A- 4 811 189
- US-A- 5 013 993
- US-A1- 2002 080 630

## Description

### Domaine

La présente description concerne de façon générale les dispositifs électroniques et, plus particulièrement, les convertisseurs alternatif-continu. La présente description s'applique de façon générale à tout système utilisant un pont redresseur, par exemple les circuits de commande de moteurs électriques, les chargeurs électriques, les alimentations à découpage, etc.

### Exposé de l'art antérieur

On connait de nombreuses architectures de convertisseurs alternatif-continu, basées sur des éléments de redressement commandables (thyristors, par exemple) ou non (diodes), montés en pont redresseur, alimentés par une tension alternative et fournissant une tension continue, cette tension continue étant le cas échéant elle-même reconvertie en tension alternative.

On souhaite généralement minimiser la consommation en veille, c'est-à-dire la consommation alors que le convertisseur est alimenté par une tension alternative mais qu'aucune charge ne prélève de l'énergie en sortie.

Par ailleurs, on souhaite également limiter le courant d'appel, c'est-à-dire les pics de courant qui se produisent à chaque alternance de la tension alternative tant que la tension aux bornes d'un condensateur en sortie du pont de redressement n'a pas atteint un niveau suffisant et ceci notamment dans les phases de démarrage.

Les documents US 5,715,154, US 2002/080630 et JPS62135269 décrivent des exemples de convertisseurs alternatif-continu.

Le document US 5013993 décrit un chargeur de batterie dont le fonctionnement dépend de la température.

Le document FR 2038643 décrit un alternateur à caractéristique intensité-vitesse étagée.

Le document CN 101982934 décrit un dispositif à démarrage en douceur et un procédé de commutation de puissance d'une alimentation.

Le document FR 2742013 décrit un procédé et un dispositif de limitation d'appel de courant d'un condensateur associé à un redresseur.

Le document US 4811189 décrit un circuit de redressement alternatif comportant des moyens pour limiter la tension redressée.

Le document US 4658199 décrit un circuit de régulation de courant.

### Résumé

Un mode de réalisation pallie tout ou partie des inconvénients des circuits usuels de commande d'un convertisseur de puissance.

Un mode de réalisation propose une solution de circuit de démarrage d'un convertisseur dans lequel les pertes en veille sont réduites.

Ainsi, un mode de réalisation prévoit un convertisseur alternatif-continu comportant :
une première borne et une deuxième borne, destinées à recevoir une tension alternative ;
une troisième borne et une quatrième borne, destinées à fournir une première tension continue ;
un pont de redressement dont des bornes d'entrée sont respectivement connectées aux première et deuxième bornes ; et dont
soit des bornes de sortie sont, respectivement, reliées par un élément de commutation commandable à la troisième borne, et connectées à la quatrième borne,
soit des bornes de sortie sont respectivement connectées aux troisième et quatrième bornes, deux éléments de redressement commandables du pont reliant respectivement les première et deuxième bornes à la troisième borne.

Selon un mode de réalisation, une électrode de commande de l'élément de commutation ou des électrodes de commande des éléments de redressement sont couplées, par un premier commutateur, à une borne de fourniture d'un potentiel positif et, par un deuxième commutateur, à la quatrième borne.

Selon un mode de réalisation, le convertisseur comporte en outre un circuit de fourniture dudit potentiel positif, couplé par au moins une diode à la première borne.

Selon un mode de réalisation, le convertisseur comporte en outre un microcontrôleur de commande des premier et deuxième commutateurs, alimenté à partir dudit potentiel positif.

Selon un mode de réalisation, le premier commutateur est un transistor bipolaire de type PNP ou un transistor MOS à canal P, le deuxième commutateur étant un transistor bipolaire de type NPN ou un transistor MOS à canal N.

Selon un mode de réalisation, l'élément de commutation est un triac.

Selon un mode de réalisation, l'élément de commutation est un thyristor à gâchette de cathode susceptible d'être commandé par injection de courant dans la gâchette et par extraction de courant dans la gâchette.

Selon un mode de réalisation, les éléments de redressement commandables sont des thyristors à gâchette de cathode susceptibles d'être commandés par injection de courant dans la gâchette et par extraction de courant dans la gâchette.

Un mode de réalisation prévoit un procédé de commande d'un convertisseur, dans lequel le premier commutateur injecte un courant dans la gâchette de l'élément de commutation ou des éléments de redressement dans une première phase, puis le second commutateur extrait un courant de gâchette de l'élément de commutation ou des éléments de redressement dans une deuxième phase.

Selon un mode de réalisation, dans la deuxième phase, l'élément de commutation ou les éléments de redressement sont commandés en angle de phase pour limiter le courant d'appel.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un convertisseur alternatif continu ;
les figures 2A, 2B, 2C, 2D et 2E illustrent, par des chronogrammes, le fonctionnement du convertisseur de la figure 1 ;
la figure 3 représente un autre mode de réalisation d'un convertisseur alternatif-continu ;
la figure 4 représente un détail d'un autre mode de réalisation d'un convertisseur alternatif-continu ;
la figure 5 est une vue en coupe schématique de réalisation d'un thyristor à gâchette de cathode à courant de gâchette positif ; et
la figure 6 est une vue en coupe schématique de réalisation d'un thyristor à gâchette de cathode à courant de gâchette négatif.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les circuits alimentés par le convertisseur de puissance n'ont pas été détaillés, les modes de réalisation décrits étant compatibles avec les applications usuelles. Dans la description, le terme "connecté" désigne une connexion directe entre deux éléments, alors que les termes "couplé" et "relié" désignent une connexion entre deux éléments qui peut être directe ou par l'intermédiaire d'un ou plusieurs autres éléments. Lorsque l'on fait référence aux termes "environ", "approximativement" ou "de l'ordre de", cela signifie à 10 % près, de préférence à 5 % près.

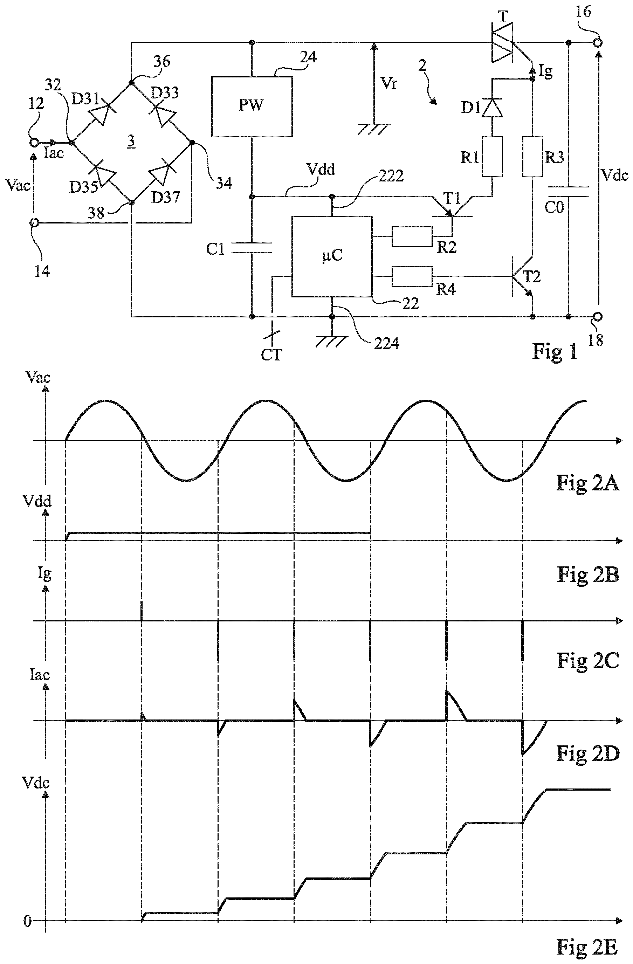

La figure 1 représente, de façon schématique, un mode de réalisation d'un convertisseur alternatif-continu.

Deux bornes d'entrée 12 et 14 sont destinées à recevoir une tension alternative Vac, par exemple, la tension du réseau de distribution électrique (par exemple 230 ou 120 volts, 50 ou 60 Hz). La borne 12 est connectée à une première borne 32 d'entrée de redressement d'un pont redresseur 3 (par exemple, double alternance) dont la seconde borne 34 d'entrée de redressement est connectée à la borne 14. Une première borne de sortie redressée 36 du pont 3 est reliée, par l'intermédiaire d'un interrupteur, dans cet exemple un triac T, à une première borne de sortie 16 fournissant le potentiel haut d'une tension continue Vdc. Une deuxième borne de sortie redressée 38 du pont 3 est connectée à une deuxième borne de sortie 18 fournissant le potentiel bas de la tension continue Vdc. Dans l'exemple de la figure 1, les bornes 38 et 18 définissent un potentiel de référence (la masse) du montage, la tension de sortie Vdc étant alors positive. Un condensateur C0 de stockage et lissage relie les bornes 16 et 18.

Le pont redresseur 3 est, dans cet exemple, constitué de quatre diodes D31, D33, D35 et D37. Les diodes D31 et D33 relient respectivement les bornes 32 et 34 à la borne 36 (cathodes des diodes D31 et D33 côté borne 36) et les diodes D35 et D37 relient respectivement les bornes 32 et 34 à la borne 38 (anodes des diodes D35 et D37 côté borne 38). La tension Vr entre les bornes 36 et 38 correspond à la tension Vac redressée non filtrée.

Le triac T a pour rôle de commander la fourniture d'énergie en sortie. Il est commandé en régime impulsionnel, c'est-à-dire qu'un circuit 2 de commande applique une impulsion sur sa gâchette à chaque demi-alternance de la tension alternative Vac. Le triac T reste alors conducteur jusqu'à ce que le courant qui le traverse disparaisse.

Le circuit de commande 2 comporte un circuit numérique 22, par exemple un microcontrôleur (pC), chargé de générer des impulsions de commande du triac T. Le microcontrôleur 22 reçoit différentes consignes CT ou mesures afin de générer ces impulsions aux bons moments en fonction, entre autres, des besoins de la charge alimentée par le convertisseur.

Le microcontrôleur 22 est alimenté par le pont 3, c'est-à-dire qu'il n'est pas nécessaire de prévoir de circuit auxiliaire prélevant l'énergie d'alimentation directement sur la tension Vac. Dans l'exemple représenté, un circuit d'alimentation 24 (PW) est connecté, en série avec un élément capacitif C1, entre les bornes 36 et 38. Deux bornes 222 et 224 d'alimentation du microcontrôleur 22 sont connectées aux bornes du condensateur C1 fournissant sa tension d'alimentation Vdd. Le circuit 24 a pour rôle de réguler la tension Vdd afin qu'elle reste compatible avec les besoins d'alimentation du microcontrôleur. En pratique, la tension Vdd est une basse tension par rapport aux tensions Vac, Vr et Vdc. Typiquement, la tension Vdd est inférieure à 10 volts.

A titre d'exemple, le circuit 24 peut être une alimentation à découpage. Il est alors constitué d'un transistor MOS contrôlé par un circuit intégré régulant la tension Vdd. Ce transistor MOS commande en général une inductance ou un primaire d'un transformateur magnétique.

Le microcontrôleur 22 commande un premier transistor T1 reliant la borne 222 (au potentiel Vdd) à la gâchette du triac T. Dans l'exemple de la figure 1, le transistor T1 est un transistor bipolaire de type PNP dont l'émetteur est connecté à la borne 222 et dont le collecteur est relié, par l'intermédiaire d'une diode D1 en série avec une résistance R1 optionnelle, à la gâchette du triac T. La base du transistor T1 est reliée, optionnellement par l'intermédiaire d'une résistance R2, à une première sortie du microcontrôleur 22.

Le microcontrôleur 22 commande également un deuxième transistor T2 de commande du triac T. Dans l'exemple de la figure 1, le transistor T2 est un transistor bipolaire de type NPN dont l'émetteur est connecté à la masse 38 et dont le collecteur est relié, par l'intermédiaire d'une résistance R3, à la gâchette du triac T. La base du transistor T2 est reliée, optionnellement par l'intermédiaire d'une résistance R4 à une deuxième sortie du microcontrôleur 22.

Les figures 2A, 2B, 2C, 2D et 2E sont des chronogrammes illustrant le fonctionnement du convertisseur de la figure 1 au démarrage. La figure 2A représente un exemple d'allure de la tension Vac. La figure 2B représente l'allure correspondante de la tension Vdd. La figure 2C représente l'allure du courant de gâchette Ig du triac T. La figure 2D représente l'allure du courant Iac prélevé sur l'alimentation alternative. La figure 2E représente l'allure correspondante de la tension Vdc.

Initialement, le condensateur C0 est déchargé, de même que le condensateur C1. Le microcontrôleur 22 n'est donc pas alimenté et le triac T est ouvert (bloqué).

Lorsque la tension alternative Vac est appliquée entre les bornes 12 et 14 (par exemple, par l'intermédiaire d'un interrupteur de mise sous tension non représenté), le condensateur C1 est chargé par le bloc d'alimentation 24 jusqu'à atteindre la tension Vdd requise pour le fonctionnement du microcontrôleur 22.

Toutefois, comme le condensateur C0 est déchargé, on ne peut pas tirer du courant dans la branche du transistor T2 pour déclencher le triac T. Il faut donc appliquer un courant de gâchette positif au triac pour le rendre conducteur et commencer à charger le condensateur C0. C'est le rôle du transistor T1. A la fin d'une première alternance de la tension Vac (ou plus généralement à la fin d'une alternance où le microcontrôleur est alimenté mais où le condensateur C0 est déchargé), le microcontrôleur commande la fermeture du transistor T1 en tirant un courant de base sur celui-ci pendant une brève durée (impulsion d'une durée comprise entre par exemple environ 1 µs et environ 1 ms). Cela provoque l'injection d'un courant Ig positif dans la gâchette du triac T et sa mise en conduction jusqu'à la fin de l'alternance. Le condensateur C0 est donc chargé pendant cette fin d'alternance. Afin de limiter le courant d'appel, la fermeture du transistor T1, donc du triac T, est provoquée au voisinage de la fin de l'alternance.

Dès que la tension Vdc aux bornes du condensateur C0 est suffisante, le microcontrôleur 22 commande, à chaque alternance et de façon impulsionnelle, le transistor T2 pour tirer du courant dans la gâchette du triac (courant de gâchette Ig négatif) et provoquer la charge progressive du condensateur C0 (tension Vdc augmentant progressivement d'une alternance à la suivante).

Afin de respecter un démarrage en douceur (Soft Start) et limiter les appels de courant, le microcontrôleur 22 commande le transistor T2 en angle de phase, c'est-à-dire qu'il commence par provoquer la fermeture du triac dans la portion décroissante de l'alternance et progressivement de plus en plus tôt en fonction du niveau de charge du condensateur C0. Dès que le condensateur C0 est suffisamment chargé, le triac peut être commandé par un signal continu ou impulsionnel. Dans le cas d'une commande impulsionnelle, la commande est synchronisée le mieux possible avec l'instant où le condensateur doit être rechargé à chaque demi-alternance (soit, quand la tension Vdc devient inférieure à la tension Vac).

Le nombre de cycles requis pour débuter la charge du condensateur C0 (nombre de périodes de conduction du transistor T1), donc pour réveiller le système, ainsi que le nombre de cycles requis pour le démarrage (jusqu'à ce que le condensateur C0 soit chargé) dépend de l'application et de la consommation éventuelle en aval lors du démarrage.

En pratique, une seule période est le plus souvent suffisante pour charger suffisamment le condensateur C0 afin d'avoir une tension suffisante pour fournir le courant de gâchette requis pour amorcer le triac en commandant le transistor T2. Le transistor T1 ne sert donc dans ce cas qu'une fois par démarrage du convertisseur.

Un avantage est que toutes les références des alimentations et des signaux de commande sont communes (la masse) . On évite ainsi les éléments de type optocoupleurs, transformateurs, etc., contrairement par exemple à la solution du document JP 62135269.

Un autre avantage est qu'il n'est plus nécessaire d'utiliser un élément résistif pour limiter le courant d'appel au démarrage du convertisseur, le triac T pouvant être utilisé en commande de phase dès la première alternance.

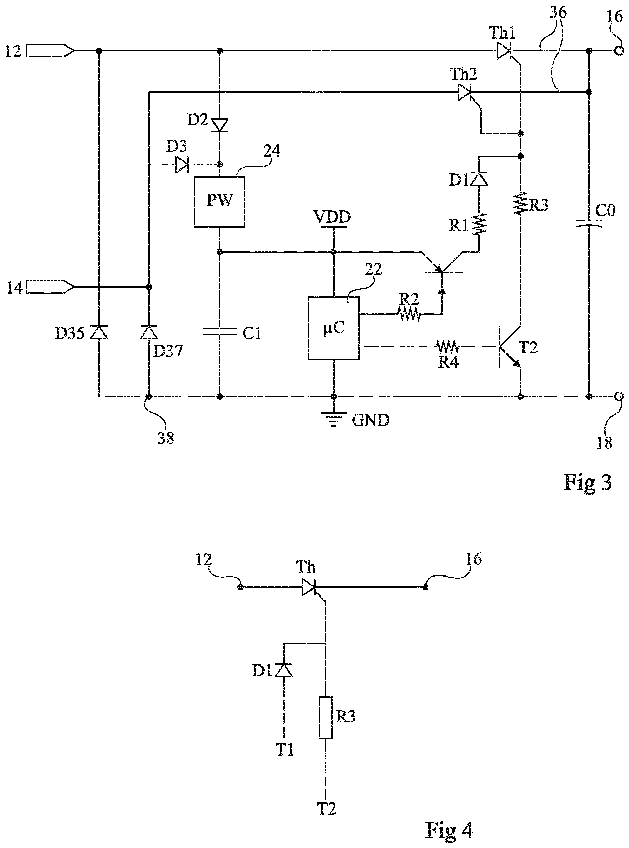

La figure 3 représente un autre mode de réalisation dans lequel le triac T est remplacé par deux thyristors Th1 et Th2 à gâchette de cathode. En fait, cela revient à remplacer les diodes D31 et D33 du pont 3 par les thyristors Th1 et Th2 de façon à intégrer la commande dans le pont. Afin de permettre l'alimentation du circuit 24, on prévoit alors au moins une diode D2 reliant la borne 12 au circuit 24. Dans l'exemple de la figure 3, le redressement d'alimentation du microcontrôleur 22 est monoalternance, ce qui suffit généralement en raison de la faible puissance requise. En variante, on prévoit une autre diode (D3 en pointillés en figure 3) reliant la borne 14 au circuit 24 pour effectuer un redressement double alternance.

Le fonctionnement du circuit de la figure 3 se déduit du fonctionnement exposé en relation avec la figure 1. Les thyristors Th1 et Th2 sont cependant réalisés pour pouvoir être commandés à la fois par un courant de gâchette négatif et par un courant de gâchette positif. Cela revient en quelque sorte à utiliser un demi-triac afin de conserver le caractère redresseur du thyristor.

La figure 4 représente, de façon partielle, une variante de réalisation d'un convertisseur.

Par rapport au montage de la figure 1, le triac T est remplacé par un thyristor Th. En effet, le caractère bidirectionnel de la conduction du triac n'est ici pas utilisé. Ce qui importe, c'est de pouvoir commander l'interrupteur placé entre les bornes 12 et 16 par un courant de gâchette positif ou négatif. Comme pour le mode de réalisation de la figure 3, le thyristor à gâchette de cathode doit pouvoir être commandé en tirant un courant sur sa gâchette.

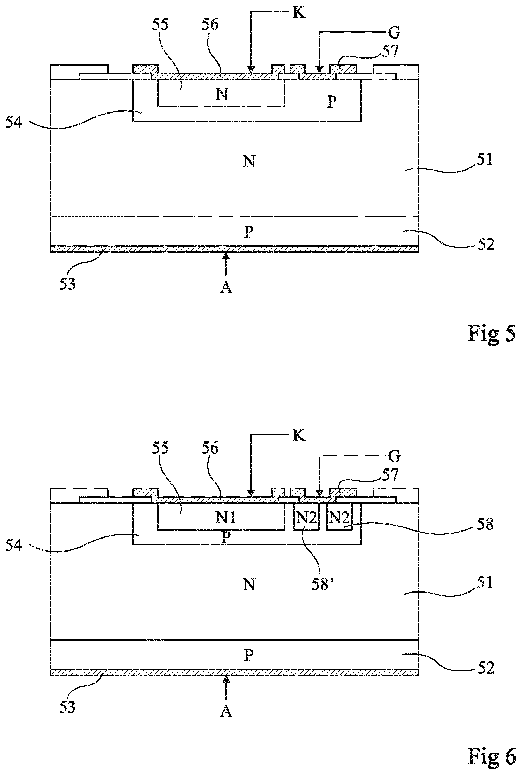

Les figures 5 et 6 sont des coupes schématiques de réalisations de thyristors à gâchette de cathode respectivement à courant de gâchette positif ou injection de courant (cas le plus courant) et à courant de gâchette négatif ou extraction de courant.

Selon ces exemples, le thyristor est réalisé dans un substrat 51 de type N. En face arrière, une couche 52 de type P définit une région d'anode, l'électrode d'anode A étant obtenue par une métallisation 53 de reprise de contact de cette région 52. Un caisson 54 de type P est réalisé en face avant. Une région de cathode 55 de type N (N1) est formée dans ce caisson 54 et une métallisation 56 de reprise de contact de cette région 55 définit l'électrode de cathode K.

Dans le cas de la figure 5, un contact 57 de gâchette est réalisé au niveau du caisson de type P 54. Ainsi, l'injection d'un courant de gâchette amorce le thyristor si celui-ci est convenablement polarisé (tension anode-cathode positive).

Dans le cas de la figure 6, une région 58 de type N (N2) est ajoutée sous le contact 57 de gâchette. Cette région 58 permet un amorçage par un courant de gâchette négatif (c'est-à-dire circulant depuis la gâchette jusqu'à la cathode) en autorisant une injection d'électrons dans le substrat 51 de type N qui correspond à la base du transistor bipolaire de type PNP formé par les régions 52-51-54.

La région N2 est scindée en au moins deux régions 58 et 58' afin de permettre un contact direct de la région 54 sur la gâchette. Ce mode de réalisation, appelé « trou de court-circuit » permet d'améliorer l'immunité aux perturbations transitoires en tension du thyristor et la commande par un courant de gâchette positif (c'est-à-dire circulant depuis la gâchette G jusqu'à la cathode K1). Ce mode de réalisation permet donc à ce thyristor d'être utilisé pour réaliser les thyristors Th1 et Th2 dans le circuit de la figure 3, ou le thyristor Th à la figure 4.

Divers modes de réalisation ont été décrits. Diverses variantes et modifications apparaîtront à l'homme de l'art. Par exemple, on pourra utiliser une source de courant au lieu de la résistance R3 afin de s'assurer de tirer un courant de gâchette des composants T, Th1, Th2 et Th qui reste approximativement constant quelle que soit la tension aux bornes du condensateur C. De plus, la mise en oeuvre pratique des modes de réalisation qui ont été décrits est à la portée de l'homme du métier à partir des indications fonctionnelles données ci-dessus. En particulier, la programmation du microcontrôleur dépend de l'application et les réalisations décrites sont compatibles avec les applications usuelles utilisant un microcontrôleur ou équivalent pour commander un convertisseur. En outre, la réalisation d'un composant remplissant une fonction d'élément de commutation (triac) ou de redressement (thyristor) normalement fermé, commandable à la fermeture par une impulsion positive ou négative appliquée sur une électrode de commande, est à la portée de l'homme du métier à partir des indications données ci-dessus.

## Revendications

1. Convertisseur alternatif-continu comportant :
une première borne (12) et une deuxième borne (14), destinées à recevoir une tension alternative (Vac) ;
une troisième borne (16) et une quatrième borne (18), destinées à fournir une première tension continue (Vdc) ;
un pont de redressement (3) dont des bornes d'entrée (32, 34) sont respectivement connectées aux première et deuxième bornes, et dont :
soit des bornes de sortie (36, 38) sont, respectivement, reliées par un élément de commutation commandable (T ; Th) à la troisième borne, et connectées à la quatrième borne,
soit des bornes de sortie (36, 38) sont respectivement connectées aux troisième et quatrième bornes, deux éléments de redressement (Th1, Th2) commandables du pont reliant respectivement les première et deuxième bornes à la troisième borne,
dans lequel une électrode de commande de l'élément de commutation (T ; Th) ou des électrodes de commande des éléments de redressement (Th1, Th2) sont couplées, par un deuxième commutateur (T2) configuré pour extraire un courant dans l'électrode de commande de l'élément de commutation commandé ou dans les électrodes de commande des éléments de redressement, à la quatrième borne (18);
un circuit (24) de fourniture dudit potentiel positif, couplé par au moins une diode (D31 ; D2) à la première borne (12) ; et
un microcontrôleur (22) de commande du deuxième commutateur (T2), alimenté à partir dudit potentiel positif, **caractérisé en ce qu'**une électrode de commande de l'élément de commutation (T ; Th) ou des électrodes de commande des éléments de redressement (Th1, Th2) sont couplées, par un premier commutateur (T1) configuré pour injecter un courant dans l'électrode de commande de l'élément de commutation commandé ou dans les électrodes de commande des éléments de redressement, à une borne de fourniture d'un potentiel positif, le premier commutateur étant commandé par le microcontrôleur (22) et le premier commutateur n'étant utilisé qu'au démarrage du convertisseur de sorte à charger suffisamment un condensateur (C0) reliant la troisième borne (16) à la quatrième borne (18) afin d'avoir une tension aux bornes du condensateur suffisante pour fournir le courant de gâchette requis pour amorcer l'élément de commutation commandable (T; Th) ou les éléments de redressement (Th1, Th2) en commandant le deuxième commutateur (T2).

2. Convertisseur selon la revendication 1, dans lequel le premier commutateur (T1) est un transistor bipolaire de type PNP ou un transistor MOS à canal P, le deuxième commutateur (T2) étant un transistor bipolaire de type NPN ou un transistor MOS à canal N.

3. Convertisseur selon la revendication 1 ou 2, dans lequel l'élément de commutation est un triac (T).

4. Convertisseur selon la revendication 1 ou 2, dans lequel l'élément de commutation est un thyristor à gâchette de cathode (Th) susceptible d'être commandé par injection de courant dans la gâchette et par extraction de courant dans la gâchette.

5. Convertisseur selon la revendication 1 ou 2, dans lequel les éléments de redressement commandables sont des thyristors à gâchette de cathode (Th1, Th2) susceptibles d'être commandés par injection de courant dans la gâchette et par extraction de courant dans la gâchette.

6. Procédé de commande d'un convertisseur selon l'une quelconque des revendications 1 à 5, **caractérisé en ce que** le premier commutateur (T1) injecte un courant dans la gâchette de l'élément de commutation (T ; Th) ou des éléments de redressement (Th1, Th2) dans une première phase, puis le second commutateur (T2) extrait un courant de gâchette de l'élément de commutation (T ; Th) ou des éléments de redressement (Th1, Th2) dans une deuxième phase.

7. Procédé selon la revendication 6, dans lequel, dans la deuxième phase, l'élément de commutation (T ; Th) ou les éléments de redressement (Th1, Th2) sont commandés en angle de phase pour limiter le courant d'appel.

## Patentansprüche

1. Ein Wechselstrom-Gleichstrom-Wandler, der Folgendes aufweist:
einen ersten Anschluss (12) und einen zweiten Anschluss (14), die dazu bestimmt sind, eine Wechselspannung (Vac) zu empfangen;
eine dritte Klemme (16) und eine vierte Klemme (18), die dazu bestimmt sind, eine erste Gleichspannung (Vdc) zu liefern;
eine Gleichrichterbrücke (3) mit Eingangsklemmen (32, 34), die mit der ersten bzw. mit der zweiten Klemme verbunden sind; wobei:
entweder Ausgangsklemmen (36, 38), die über ein steuerbares Schaltelement (T; Th) mit der dritten Klemme verbunden sind bzw. mit der vierten Klemme verbunden sind,
oder Ausgangsklemmen (36, 38), die mit der dritten Klemme bzw. mit der vierten Klemme verbunden sind, wobei zwei steuerbare Gleichrichterbrückenelemente (Th1, Th2) die erste Klemme bzw. die zweite Klemme mit der dritten Klemme verbinden,
wobei eine Elektrode zur Steuerung des Schaltelements (T; Th) oder Elektroden zur Steuerung der Gleichrichterelemente (Th1, Th2) durch einen zweiten Schalter (T2), der so konfiguriert ist, dass er einen Strom von der Elektrode zur Steuerung des gesteuerten Schaltelements oder von der Elektrode zur Steuerung der Gleichrichterelemente abzieht, mit dem vierten Anschluss (18) verbunden ist bzw. sind;
eine Schaltung (24) zum Liefern des positiven Potentials, die durch mindestens eine Diode (D31; D2) mit dem ersten Anschluss (12) verbunden ist; und
einen Mikrocontroller (22) zum Steuern des zweiten Schalters (T2), der von dem positiven Potential gespeist wird, **dadurch gekennzeichnet, dass** eine Elektrode zum Steuern des Schaltelements (T; Th) oder Elektroden zur Steuerung der Gleichrichterelemente (Th1, Th2) durch einen ersten Schalter (T1), der so konfiguriert ist, dass er einen Strom in die Elektrode zur Steuerung des gesteuerten Schaltelements oder in die Elektroden zur Steuerung der Gleichrichterelemente einspeist, mit einem Anschluss zum Liefern eines positiven Potentials gekoppelt ist bzw. sind, wobei der erste Schalter durch den Mikrocontroller (22) gesteuert wird und der erste Schalter nur beim Start des Wandlers verwendet wird, um einen Kondensator (C0), der den dritten Anschluss (16) mit dem vierten Anschluss (18) verbindet, ausreichend zu laden, um eine Spannung an den Anschlüssen des Kondensators zu erhalten, die ausreicht, um den zum Einschalten des steuerbaren Schaltelements (T; Th) oder der Gleichrichterelemente (Th1, Th2) erforderlichen Gate-Strom zu liefern, und zwar durch Steuern des zweiten Schalters (T2).

2. Wandler nach Anspruch 1, wobei der erste Schalter (T1) ein Bipolartransistor vom PNP-Typ oder ein P-Kanal-MOS-Transistor ist, wobei der zweite Schalter (T2) ein Bipolartransistor vom NPN-Typ oder ein N-Kanal-MOS-Transistor ist.

3. Wandler nach Anspruch 1 oder 2, wobei das Schaltelement ein Triac (T) ist.

4. Wandler nach Anspruch 1 oder 2, wobei das Schaltelement ein Kathoden-Gate-Thyristor (Th) ist, der durch Einspeisen von Strom in das Gate und durch Abziehen von Strom aus dem Gate gesteuert werden kann.

5. Wandler nach Anspruch 1 oder 2, wobei die steuerbaren Gleichrichterelemente Kathoden-Gate-Thyristoren (Th1, Th2) sind, die durch Einspeisen von Strom in das Gate und durch Abziehen von Strom aus dem Gate gesteuert werden können.

6. Verfahren zum Steuern des Wandlers nach einem der Ansprüche 1 bis 5, wobei der erste Schalter (T1) in einer ersten Phase einen Strom in das Gate des Schaltelements (T; Th) oder der Gleichrichterelemente (Th1, Th2) einspeist, wobei danach der zweite Schalter (T2) in einer zweiten Phase einen Gate-Strom aus dem Schaltelement (T; Th) oder aus den Gleichrichterelementen (Th1, Th2) abzieht.

7. Verfahren nach Anspruch 6, wobei in der zweiten Phase das Schaltelement (T; Th) oder die Gleichrichterelemente (Th1, Th2) hinsichtlich des Phasenwinkels gesteuert werden, um den Einschaltstrom zu begrenzen.

## Claims

1. An AC/DC converter comprising:
a first terminal (12) and a second terminal (14), intended to receive an AC voltage (Vac);
a third terminal (16) and a fourth terminal (18), intended to supply a first DC voltage (Vdc);
a rectifying bridge (3) having input terminals (32, 34) respectively connected to the first and second terminals; and having:
either output terminals (36, 38) respectively coupled by a controllable switching element (T; Th) to the third terminal and connected to the fourth terminal,
or output terminals (36, 38) respectively connected to the third and fourth terminals, two controllable rectifying elements (Th1, Th2) of the bridge respectively coupling the first and second terminals to the third terminal,
wherein an electrode for controlling the switching element (T; Th) or electrodes for controlling the rectifying elements (Th1, Th2) are coupled, by a second switch (T2), configures to extract a current from the electrode for controlling the controlled switching element or from the electrode for controlling the rectifying elements, to the fourth terminal (18);
a circuit (24) for delivering said positive potential, coupled by at least one diode (D31; D2) to the first terminal (12); and
a microcontroller (22) for controlling the second switch (T2), powered from said positive potential, **characterized in that** an electrode for controlling the switching element (T; Th) or electrodes for controlling the rectifying elements (Th1, Th2) are coupled, by a first switch (T1) configured to inject a current into the electrode for controlling the controlled switching element or in the electrodes for controlling the rectifying elements, to a terminal for supplying a positive voltage, the first switch being controlled by the microcontroller (22) the first switch being only used at the converter start in order to sufficiently charge a capacitor (C0) coupling the third terminal (16) to the fourth terminal (18) in order to obtain a voltage across the capacitor sufficient to supply the gate current required to turn on the controllable switching element (T; Th) or the rectifying elements (Th1, Tgh2) by controlling the second switch (T2).

2. The converter of claim 1, wherein the first switch (T1) is a PNP-type bipolar transistor or a P-channel MOS transistor, the second switch (T2) being an NPN-type bipolar transistor or an N-channel MOS transistor.

3. The converter of claim 1 or 2, wherein the switching element is a triac (T).

4. The converter of claim 1 or 2, wherein the switching element is a cathode-gate thyristor (Th) capable of being controlled by injection of current into the gate and by extraction of current from the gate.

5. The converter of claim 1 or 2, wherein the controllable rectifying elements are cathode-gate thyristors (Th1, Th2) capable of being controlled by injection of current into the gate and by extraction of current from the gate.

6. A method of controlling the converter of any of claims 1 to 5, wherein the first switch (T1) injects a current into the gate of the switching element (T; Th) or of the rectifying elements (Th1, Th2) in a first phase, after which the second switch (T2) extracts a gate current from the switching element (T; Th) or from the rectifying elements (Th1, Th2) in a second phase.

7. The method of claim 6, wherein, in the second phase, the switching element (T; Th) or the rectifying elements (Th1, Th2) are controlled in phase angle to limit the inrush current.
